# EUROPEAN PATENT APPLICATION

(11) **EP 2 302 840 A1**
(43) Date of publication of application: **30.03.2011**
(21) Application number: 10180829.3
(22) Date of filing: 28.09.2010
(51) Int. Cl.: H04L 12/40

(54) **Path protection by sharing continuity check messages**

(30) Priority: 29.09.2009 US 246591 P
(71) Applicant: Ceragon Networks LTD., 24 Raoul Wallenberg Street 69719 Tel-Aviv (IL)
(72) Inventor: Perelstain, Amir, 44233, Kfar-Saba (IL); Bercovich, Dudu, 44421, Kfar-Saba (IL)
(74) Representative: Fichter, Robert Arno

(57) **Abstract**

A method for managing protection of a plurality of defmed paths in a communication system including listing the defmed paths, each item in the list including a defmed path identifier, a defined path ingress node, a defined path egress node, and a defmed path protection period, wherein some of the defmed paths share an ingress node and an egress node, managing a sending of Continuity Check Messages (CCMs) along at least some of the defined paths, such that a CCM is sent every protection period, and for at least a plurality of the defined paths which share an ingress node and an egress node, managing a sharing of the protection of the plurality of the defined paths, the sharing including sending one set of CCMs, shared by the plurality of the defined paths, at a frequency based, at least in part, on a shortest one of the protection periods of the plurality of the defined paths. A method for protecting a plurality of paths which share at least one leg in a communication network, including sharing, between the paths, Continuity Check Messages (CCMs) for at least the shared leg. Related apparatus and methods are also described.

## Description

### FIELD AND BACKGROUND OF THE INVENTION

The present invention, in some embodiments thereof, relates to a point-to-point communication system, and, more particularly, but not exclusively, to a communication network, and, more particularly, but not exclusively, to an Ethernet network.

A protected path is a term for a defmed communication path between an ingress node I, also termed a head node, and an egress node E, also termed a tail node. The protected path may include one or more intermediate nodes along the path between node I and node E. The protected path includes an active path between node I and node E, over which communication occurs, and at least one passive backup path ready to take over communication if the active path fails.

For example, communication standard G.8031 - Ethernet Linear Protection defines such a protected path, and a requirement that communication transfer from the active path to the backup path in less than a given time, for example in less than 50 mSec.

In order to verify that a path is working, a Continuity Check message (CC message - this is an Ethernet term) is sent every short while. Arrival of the CC message from node I to node E every short while, both through the active path and through the backup path, ensures that both paths are functioning. Node E replies to node I every short while that it received the CC message, signifying that communication along the path is working.

It is noted that when several protected paths are set up between the same ingress and egress nodes, each of the several protected paths uses its own CC message, protecting the same path. Because sending CC messages is unproductive overhead, there is a need for improvement and saving of the unproductive overhead.

Background art includes:
ITU-T G.8031/Y.1342, *Ethernet Linear Protection Switching,* published June 2006; and
ITU-T G.8031/Y.1342 Amendment 1, *Ethernet Linear Protection Switching,* published October 2007.

### SUMMARY OF THE INVENTION

In some point-to-point communication systems, several protected paths are set up between the same two nodes, say node I and node E. The protected paths are optionally set up for different uses, and optionally have their CC messages sent at different frequencies, based on different requirements. It is noted that the backup paths are not necessarily the same even when the active paths are the same.

The present invention, in some embodiments thereof, uses (shares) only one set of CC messages for protected paths set up between the same two nodes.

The present invention, in some embodiments thereof, uses (shares) only one set of CC messages for protected paths, if the protected paths have at least one leg in common. If a plurality of protected paths are set up, say a first path between a node A1 and a node B1, and a second path between node A2 and a node B2, and the first path and the second path have a shared leg, say between node I and node E, the shared leg between node I and node E uses only one set of CC messages for protecting the shared paths.

Additionally, CC messages are sent every so often, for example every 3.33 mSec, 10 MSec, 100 mSec, and so on, depending on the time allowed for recovery from the active path to the backup path. Each protected path therefore may have a different requirement for a CC message frequency. In some embodiments of the invention, when paths share CC messages, the frequency of CC messages sent will be that of the highest frequency required by the sharing paths, in order to provide adequate protection for the highest protection path. This creates a win-win synergy - a saving of CC messages while at the same time providing a higher level of protection to the lower-requirement paths.

According to an aspect of some embodiments of the present invention there is provided a method for managing protection of a plurality of defined paths in a communication system including listing the defmed paths, each item in the list including a defmed path identifier, a defined path ingress node, a defined path egress node, and a defmed path protection period, wherein some of the defined paths share an ingress node and an egress node, managing a sending of Continuity Check Messages (CCMs) along at least some of the defmed paths, such that a CCM is sent every protection period, and for at least a plurality of the defined paths which share an ingress node and an egress node, managing a sharing of the protection of the plurality of the defmed paths, the sharing including sending one set of CCMs, shared by the plurality of the defined paths, at a frequency based, at least in part, on a shortest one of the protection periods of the plurality of the defined paths.

According to some embodiments of the invention, when a message sent along one of the defined paths sharing protection can be detected as sent along one of the defined paths sharing protection, sending a CCM is postponed.

According to some embodiments of the invention, the sending a CCM is postponed by the shortest one of the protection periods.

According to some embodiments of the invention, the list is included in a database.

According to some embodiments of the invention, the method further includes adding managing protection of an additional defined path, the adding including adding the path identifier, the ingress node, the egress node, and the protection period to the list; if the additional defined path shares the ingress node and the egress node with an existing defined path in the list then if the additional defmed path has a protection period equal to or longer than the shortest one of the protection periods, then sharing the one set of CCMs, with the shortest one of the protection periods, else changing the shortest one of the protection periods to be the protection period of the additional defmed path, and sharing the one set of CCMs, with the protection period of the additional defmed path; else managing the protection of the additional defmed path by sending an additional set of CCMs at a frequency defined by the protection period of the additional defined path.

According to some embodiments of the invention, the method further includes removing protection of a defined path from the managing, the removing including removing the path identifier, the ingress node, the egress node, and the protection period of the defined path from the list.

According to some embodiments of the invention, the method further includes checking whether the defmed path to be removed is protected by a shared set of CCMs with one or more existing defined paths, and if the defmed path to be removed has a protection period shorter than the protection period used by the shared set of CCMs, then changing the protection period used by the shared set of CCMs to be equal to a shortest one of the protection periods of the one or more existing defined paths.

According to an aspect of some embodiments of the present invention there is provided a method for protecting a plurality of paths which share at least one leg in a communication network, including sharing, between the paths, Continuity Check Messages (CCMs) for at least the shared leg.

According to some embodiments of the invention, the method further includes instructing a communication node to break up a protected path into a plurality of protected sub-paths, and share protection of at least one sub-path.

According to some embodiments of the invention, the instructing is performed by a CCM sharing unit which detects shared sub-paths when such shared sub-paths exist among the protected paths.

According to some embodiments of the invention, the instructing is performed by a CCM sharing unit which detects shared sub-paths when adding managing protection of an additional defined path.

According to some embodiments of the invention, the method further includes a person breaking up a protected path into a plurality of protected sub-paths, and setting up shared protection of at least one sub-path.

According to an aspect of some embodiments of the present invention there is provided a node in a communication network with protected paths, including a Continuity Check Message sharing unit.

According to some embodiments of the invention, the Continuity Check Message sharing unit includes the methods described above.

According to an aspect of some embodiments of the present invention there is provided a Continuity Check Message sharing unit for managing Continuity Check Message sharing for more than one communication node in a communication network.

According to an aspect of some embodiments of the present invention there is provided software for implementing the methods described above.

According to an aspect of some embodiments of the present invention there is provided a communication network implementing the methods described above.

According to an aspect of some embodiments of the present invention there is provided a computer-readable storage medium containing a set of instructions for a device for implementing the methods described above.

Unless otherwise defmed, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a simplified block diagram of a prior art method of protecting a plurality of protected paths between two nodes in a communication network;
FIG. 2A is a simplified block diagram of a method of protecting a plurality of protected paths between two nodes in a communication network according to an example embodiment of the invention;
FIG. 2B is a simplified block diagram of a method of protecting a plurality of protected paths between two nodes in a communication network according to a first alternative example embodiment of the invention;
FIG. 2C is a simplified block diagram of a method of protecting a plurality of protected paths between two nodes in a communication network according to a second alternative example embodiment of the invention;
FIG. 3 is a simplified flow chart for a communication node to add a protected path in the example embodiment of FIG. 2A;
FIG. 4 is a simplified flow chart for a communication node to remove a protected path in the example embodiment of FIG. 2A;
FIG. 5 is a simplified block diagram illustration of a communication network using the method of the example embodiment of FIG. 2A;
FIGS. 6A and 6B are a simplified block diagram illustrations of example protected paths in a communication network, depicting how using alternative example embodiments of the present invention saves overhead in sending Communication Continuity Messages; and
FIG. 7 is a simplified block diagram illustration of an example application of the example embodiment of FIG. 2A.

### DESCRIPTION OF SPECIFIC EMBODIMENTS OF THE INVENTION

The present invention, in some embodiments thereof, relates to a point-to-point communication system, and, more particularly, but not exclusively, to a communication network, and, more particularly, but not exclusively, to an Ethernet network.

A protected path is a term for a defined communication path between an ingress node I, also termed a head node, and an egress node E, also termed a tail node. The protected path may include one or more intermediate nodes along the path between node I and node E. The protected path includes an active path between node I and node E, over which communication occurs, and at least one passive backup path ready to take over communication if the active path fails.

For example, communication standard G.8031 - Ethernet Linear Protection defines such a protected path, and a requirement that communication transfer from the active path to the backup path in less than a given time, for example in less than 50 mSec.

In order to verify that a path is working, a Continuity Check message (CC message - this is an Ethernet term) is sent every short while. Arrival of the CC message from node I to node E every short while, both through the active path and through the backup path, ensures that both paths are functioning. Node E replies to node I every short while that it received the CC message, signifying that communication along the path is working.

Before explaining at least one embodiment of the invention in detail, it is to be understood that the invention is not necessarily limited in its application to the details of construction and the arrangement of the components and/or methods set forth in the following description and/or illustrated in the drawings. The invention is capable of other embodiments or of being practiced or carried out in various ways.

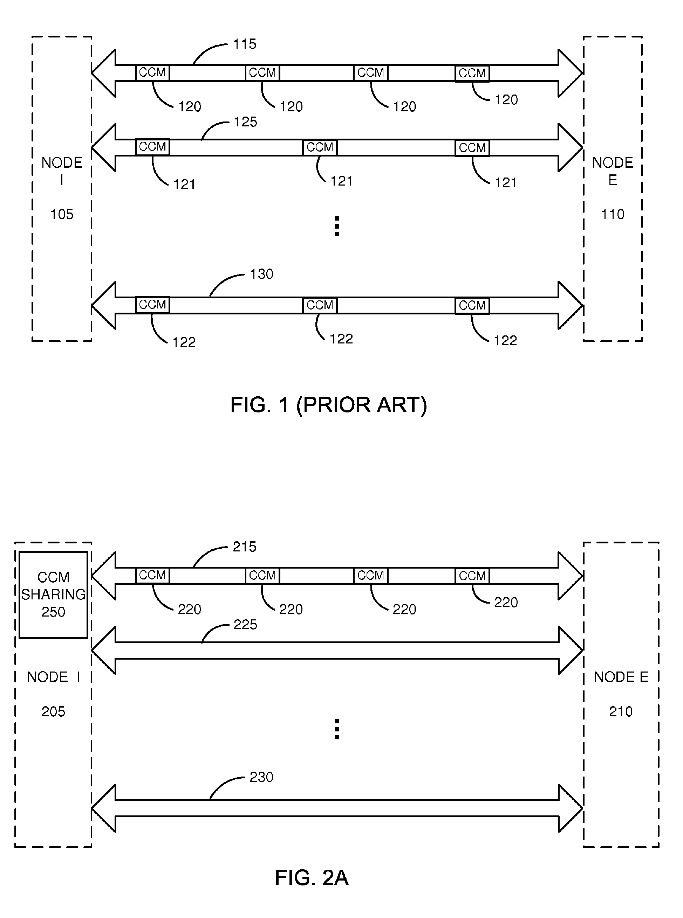

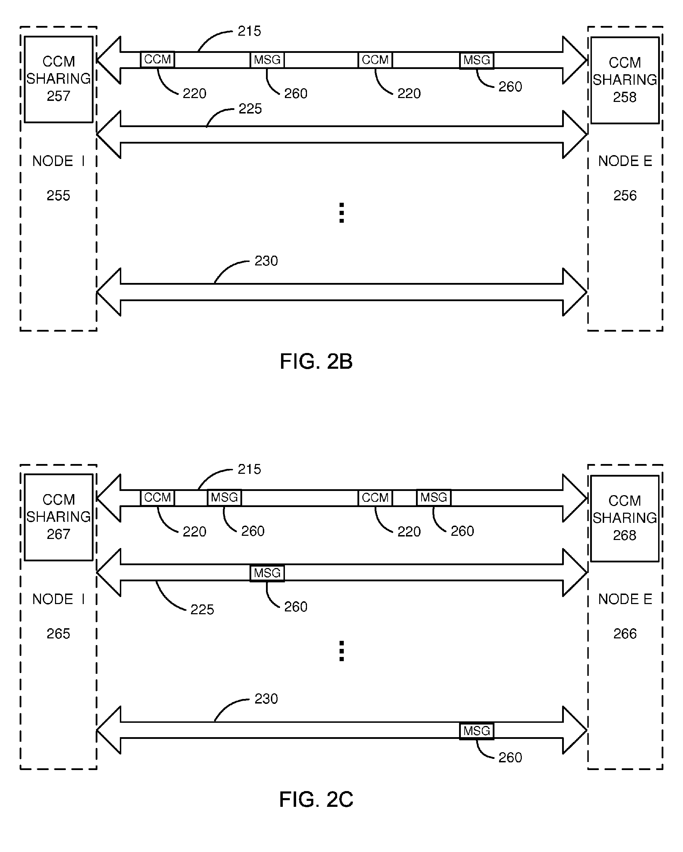

For purposes of better understanding some embodiments of the present invention, as illustrated in FIGS. 2-7 of the drawings, reference is first made to FIG. 1, which is a simplified block diagram of a prior art method of protecting a plurality of protected paths between two nodes in a communication network.

FIG. 1 depicts a first communication node I 105 and a second communication node E 110. The first communication node 1105 and the second communication node E 110 are connected by several protected communication paths.

For purpose of simplification, only protected communication paths between the first communication node I 105 and the second communication node E 110 are depicted in FIG. 1, although: other unprotected communication paths between the first communication node I 105 and the second communication node E 110 may exist; and other protected communication paths between other communication nodes, not necessarily including protection starting at the first communication node I 105 and protection ending at the second communication node E 110, may exist.

A first protected path 115 is depicted, including Continuity Check Messages (CCMs) 120 sent along the first protected path 115, by way of a non-limiting example, every F₁ milliseconds.

A second protected path 125 is depicted, including CCMs 121 sent along the second protected path 125, by way of a non-limiting example, every F₂ milliseconds.

It is noted that for purpose of the present invention, two or more protected paths are described, between the same nodes I and E. Prior art is therefore also described with reference to two or more protected paths. An Nth protected path 130 is depicted, including CCMs 122 sent along the Nth protected path 130, by way of a non-limiting example, every F_{N} milliseconds.

It is noted that the CCMs 120 121 122 depicted in FIG. 1 are intended to depict that the frequency F₁ of sending CCMs 120 along the first protected path 115 is higher than the frequency F₂ of sending CCMs 121 along the second protected path 125, and similarly for the Nth protected path 130. A message sent along a communication path may take less than a time between sending CCMs, in which case only one CCM may be traveling down each protected path at any time. FIG. 1 is intended to depict the idea of relatively different frequencies of CCM for different protected paths in a qualitative rather than qualitatively exact fashion. Additional figures in the present application will use the same qualitative convention.

CC messages are non-productive overhead, used for assuring that a communication path is working.

When setting up several defined paths to be protected, between a pair of nodes I and E, or a pair of nodes A and B, each protected path incurs its own overhead, which includes communication bandwidth of the CC messages back and forth.

One option which may be used to lower the non-productive overhead is to package the communication of the several defined paths into frames, and send the frames using only one protected path.

Another option is to have node A and node B aware whenever there are parallel defmed paths to be protected, and use (share) only one set of CC messages for all the parallel protected paths. This saves: (a) the overhead of packing into frames (b) the overhead of more CC messages than needed.

Reference is now made to FIG. 2A, which is a simplified block diagram of a method of protecting a plurality of protected paths between two nodes in a communication network according to an example embodiment of the invention.

FIG. 2A depicts a first communication node I 205 and a second communication node E 210. The first communication node I 205 and the second communication node E 210 are connected by several communication paths.

FIG. 2A follows a convention of FIG. 1 of depicting only protected communication paths between the first communication node I 205 and the second communication node E 210.

A first protected path 215 is depicted, including Continuity Check Messages (CCMs) 220 sent along the first protected path 215, by way of a non-limiting example, every F₁ milliseconds.

A second protected path 225 is depicted, and an Nth protected path 230 is also depicted.

The second protected path 225 and the Nth protected path 130 are also protected. The second protected path 225 and the Nth protected path 130 do not have CCMs sent, and the CCMs 220 of the first protected path 215 are used to protect the second protected path 225 and the Nth protected path 130.

Since CC messages are sent every so often, by way of a non-limiting example every 3.33 mSec, or every 10 mSec, or every 100 mSec, and so on, depending on a time allowed for recovery from the active path to the backup path, each of the protected paths may require a different CC message frequency.

It is noted that when paths share CC messages, the frequency of CC messages sent is optionally that of the highest frequency required by the sharing paths, in order to provide adequate protection for the highest protection path. A win-win synergy is thus produced - a saving of CC messages while at the same time providing a higher level of protection to lower-requirement paths.

By way of a non-limiting example, when two protected paths, each of which sends a CCM once every 25 milliseconds, share CCMs, then instead of 2x40=80 CCMs being sent every second, there can be just 1x40=40 CCMs sent each second, for a saving of 50% on overhead for protecting the paths. The saving is greater when more paths share the CCMs.

By way of another non-limiting example, when three protected paths, one of which sends a CCM once every 25 milliseconds, and two of which sends a CCM once every 33 milliseconds, which is a lower frequency of protection, share CCMs, then instead of 1x40+2x30=100 CCMs being sent every second, there can be just 1x40=40 CCMs sent each second, for a saving of 60% on overhead for protecting the paths.

In contrast with example embodiments of the invention, communication node I 105 of the prior art communication system of FIG. 1 does not need to manage the sharing of CCMs between the protected paths, because they are not shared.

In example embodiments of the invention, the communication node I 205 of FIG. 2A automatically manages a sharing of CCMs among protected paths. In the example embodiments the communication node I 205 comprises a CCM sharing management unit 250. The CCM sharing management unit 250 optionally keeps a list of protected paths, including, for each protected path, at least the following data:

**Table 1: Data for each protected path**

| |
|---|
| path identifier |
| ingress node |
| egress node |
| protection period |

It is noted that the above-mentioned list may be kept as a list in volatile memory, such as in RAM, and/or kept in non-volatile memory such as kept on a hard disk or flash memory. The list may be kept as a list, and/or may be kept in a database.

It is noted that the node E 210 of FIG. 2A may or may not be aware that the node I 205 is managing a sharing of the protected paths.

In some embodiments of the invention the node E 210 is not aware that protected paths are sharing CCMs, but simply returns CCMs every time the node E 210 receives a CCM from the node I 205. In such embodiments, the node E 210 does not comprise a CCM sharing management unit 250.

In some embodiments of the invention the node E 210 sends CCMs to the node I 205 every protection period, and substantially performs the management function of the node I 205, sharing CCMs among protected paths, as described above with reference to FIG. 2A and with reference to communication node I 205. In such embodiments, the node E 210 does comprise a CCM sharing management unit (not shown in FIG. 2A).

In example embodiments of the invention, a technician setting up one or more protected paths between the first communication node I 205 and the second communication node E 210 sets up a sharing of CCMs between the paths. The technician optionally selects a highest frequency of sending the CCMs, to provide suitable protection to the highest requirement.

The technician optionally knows when setting up a new protected path whether the new protected path shares input and output nodes with an existing protected path, whether the new protected path may share CCMs with the existing protected path, and at what frequency to send the CCMs.

The technician optionally knows when removing an existing protected path whether the existing protected path shares CCMs with another, remaining, existing protected path, and at what frequency to send the CCMs for the remaining protected path.

In some embodiments of the invention, the protected path conforms to communication standard G.8031 - Ethernet Linear Protection.

In some embodiments of the invention, the protected path conforms to communication standard G.8032 - Ethernet Ring Protection.

In some embodiments of the invention, the first communication node I 205 monitors transmission from a first output port (not shown) of the first communication node I 205. If the monitoring shows that transmission through the first output port has stopped, also termed "the port falls", also termed "loss of carrier", the first communication node I 205 optionally immediately switches to transmitting through a second output port, and/or over a backup path (not shown). The first communication node I 205 optionally does not wait for not receiving a CCM for a full protection period.

It is noted that embodiments of the invention are applicable to nodes which are multi-port switches in a communication network.

It is noted that detecting failure of a protected path by two methods by monitoring output and by monitoring CCMs, detects various failure modes, some common to both methods of detection, and some detected by just one method. By way of a non-limiting example, when a port "falls", both methods detect the failure. By way of another non-limiting example, when a path between two nodes fails, monitoring the output port may not detect failure, while monitoring CCMs will detect failure.

When a protected path fails, whether detection of failure is by monitoring CCMs or by monitoring output through an output port, the first communication node I 205 optionally transfers transmission to be through a backup path.

Reference is now made to FIG. 2B, which is a simplified block diagram of a method of protecting a plurality of protected paths between two nodes in a communication network according to a first alternative example embodiment of the invention.

FIG. 2B depicts a first communication node I 255 and a second communication node E 256, connected by several communication paths 215 225 230. The first communication node I 255 comprises a CCM sharing management unit 257, and the second communication node E 256 comprises a CCM sharing management unit 258. FIG. 2B follows a convention of FIG. 1 of depicting only protected communication paths between the first communication node I 255 and the second communication node E 256.

A first protected path 215 is depicted, including Continuity Check Messages (CCMs) 220 and other messages 260, sent along the first protected path 215.

In order to protect the first protected path 215, node E 256 should, by way of a non-limiting example, receive CCMs 220 every F₁ milliseconds, and reply to the CCMs 220. In fact, node E 256 can optionally send reply CCMs to node I 255 based on receiving either a CCM 220 or some other message 260, as long as node E 256 knows that the other message 260 passed through the protected path 215. In some cases, node E 256 can tell if the message 260 passed through the protected path 215. Some such example cases are:
1) If the protected path 215 is on a point-to-point connection, any communications arriving at node E 256 over the point-to-point connection may optionally imply that the protected path 215 is also functioning. If the point-to-point connection includes more than one port at each point, any communication arriving at node E 256 at a port to which the protected path 215 is connected may also imply that the protected path 215 is also functioning.
2) If the protected path 215 is not on a point-to-point connection The CCM sharing management unit 258 in node E 256 optionally detects those messages which come from node I 255. One example method for such detection is: detecting messages 260 which include a source address, such as an IP address, and in which node I 255 is a source address. The CCM sharing management unit 258 optionally reads source addresses of communication packets, and optionally identifies some messages 260 as coming from node I 255.

Another example method for such detection is optionally by contents of messages 260. In some cases contents of a message identify where a messages is coming from, and/or through what nodes a message has passed. The CCM sharing management unit 258 optionally scans through contents of messages, and messages containing such identifying content are detected as coming from node I 255.

In light of fact that the CCM sharing management unit 258 is able to detect incoming communications from node I 255 MORE OFTEN than just CCMs sent from node I 255, the CCM sharing management unit 257 of node I 255 may send CCMs to node E 256 LESS OFTEN.

When the CCM sharing management unit 257 of node I 255 detects that node I 255 sends a message 260 over the protected path 215 to node E 256 which will be detected by the CCM sharing management unit 258 of node E 256 as coming through the protected path 215, the CCM sharing management unit 257 may optionally postpone sending a CCM over the protected path 215.

The CCM sharing management unit 257 optionally waits to send another CCM over the protected path 215 up until a full protection period has passed since sending either a CCM or a message detectable by the CCM sharing management unit 258 of node E 256 as coming over the protected path 215.

In some embodiments of the invention, some of the transmission bandwidth transmitted over a communication network is for Operation, Administration, and Maintenance (OAM).

In some embodiments of the invention OAM transmissions over the protected path 215 function similarly to the messages 260 which pass over the protected path 215, serving to indicate that the protected path 215 is functioning, as are other protected paths which share the protection.

One non-limiting example of an OAM message is a CC message.

Persons skilled in the art will appreciate that another non-limiting example of an OAM message is an Automatic Protection Switching message (APS message). An APS message serves for forcing a switch between a primary protected path and a backup path. The APS message may be transferred over the backup path, since in many cases the switching is caused by a failure in the primary protected path.

Reference is now made to FIG. 2C, which is a simplified block diagram of a method of protecting a plurality of protected paths between two nodes in a communication network according to a second alternative example embodiment of the invention.

FIG. 2C depicts a first communication node I 265 and a second communication node E 266, connected by several communication paths 220 225 230. The first communication node I 265 comprises a CCM sharing management unit 267, and the second communication node E 266 comprises a CCM sharing management unit 268. FIG. 2B follows a convention of FIG. 1 of depicting only protected communication paths between the first communication node I 265 and the second communication node E 266.

A first protected path 215 is depicted, including Continuity Check Messages (CCMs) 220 and other messages 260, sent along the first protected path 215.

According to the method depicted in Fig. 2B, in order to protect the first protected path 215, node E 256 should, by way of a non-limiting example, receive CCMs 220 and/or messages 260 which the CCM sharing management unit 168 can identify as coming on the first protected path 215, every F₁ milliseconds.

In fact, messages 260 coming along other paths sharing the protection of the first path 215, such as a message 260 coming along a shared protection path 225, also indicate that a path between the first communication node I 265 and the second communication node E 266 is working.

The CCM sharing management unit 268 optionally uses any of the methods described above with reference to FIG. 2B to detect messages 260 coming along a shared protection path, such as the shared protection path 225, and/or even a non-protected but shared path 230. Messages coming along a path which shares the physical medium which is used for the first protected path 215 indicate that the shared path is operational.

In light of fact that the CCM sharing management unit 268 is able to detect incoming communications from node I 255 MORE OFTEN than just CCMs and messages sent over the first protected path 215, the CCM sharing management unit 267 of node I 265 may send CCMs to node E 266 LESS OFTEN.

When the CCM sharing management unit 267 of node I 265 detects that node I 265 sends a message 260 over one of the paths sharing communication with the protected path 215, and that the message 260 will be detected by the CCM sharing management unit 268 of node E 256 as coming through the shared communication path, the CCM sharing management unit 267 may optionally refrain from sending a CCM over the protected path 215, as described above with reference to FIG. 2B.

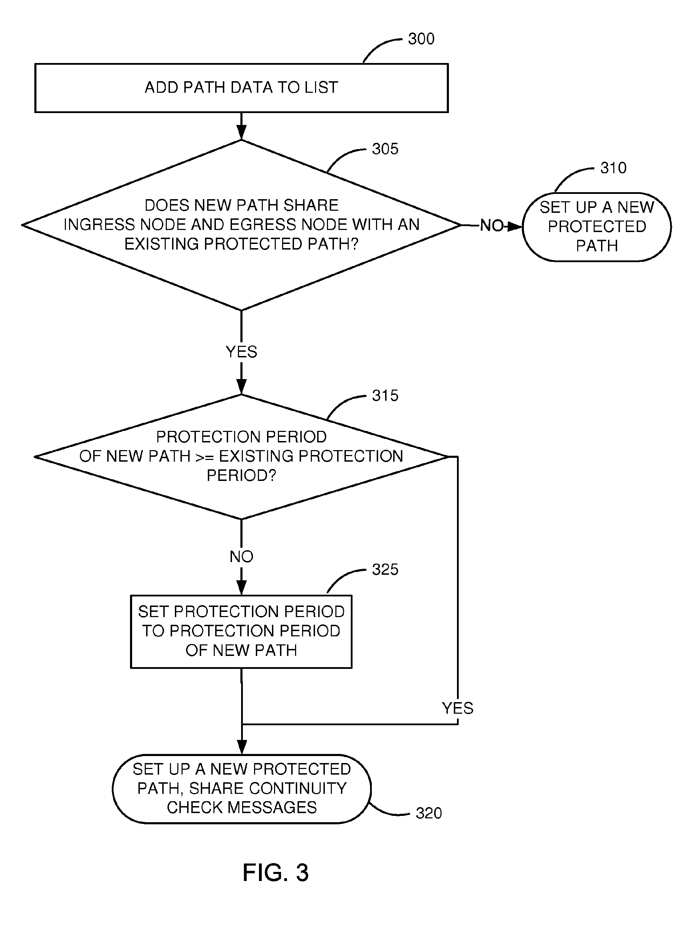

Reference is now made to FIG. 3, which is a simplified flow chart for a communication node to add a protected path in the example embodiment of FIG. 2A.

When adding a protected path, the communication node I 205 adds data defining the new protected path to a list of protected paths which the communication node I 205 manages (300).

The communication node I 205 also checks whether the new protected path shares both an ingress node and an egress node with an existing protected path (305).

If the new protected path does not share both an ingress node and an egress node with an existing protected path, then the communication node I 205 sets up a new protected path using the ingress node and the egress node of the new protected path, and sends CCMs along the protected path according to a protection period required for the new protected path (310).

If the new protected path shares an ingress node and an egress node with one or more existing protected paths, then the communication node I 205 checks whether a protection period required for the new protected path is greater than or equal to an existing protection period used for the existing protected paths (315).

If the protection period required for the new protected path is greater or equal to an existing protection period used for the existing protected paths, the communication node I 205 sets up a new protected path using the ingress node and the egress node of the new protected path, and does not need to send additional CCMs, but rather shares the existing CCMs (320).

If the protection period required for the new protected path is less than the existing protection period used for the existing protected path, the communication node I 205 sets a new protection period equal to the protection period required for the new protected path (325), and sets up the new protected path using the ingress node and the egress node of the new protected path, and sharing the CCMs with the new protection period (320).

In some embodiments of the invention, all it takes to remove a protected path from protection is for the communication node I 205 to remove the path identifier, the ingress node, the egress node, and the protection period which refer to the removed path from the path protection list. If one or more additional paths are still sharing CCMs along the path, the CCMs continue being sent at an existing protection period. If no more protected paths remain to share CCMs, no more CCMs are sent along the path.

The above method makes management of shared CCMs simple, and provides protection as good as or better than required.

In some embodiments of the invention, protection period of remaining protected paths is adjusted according to need.

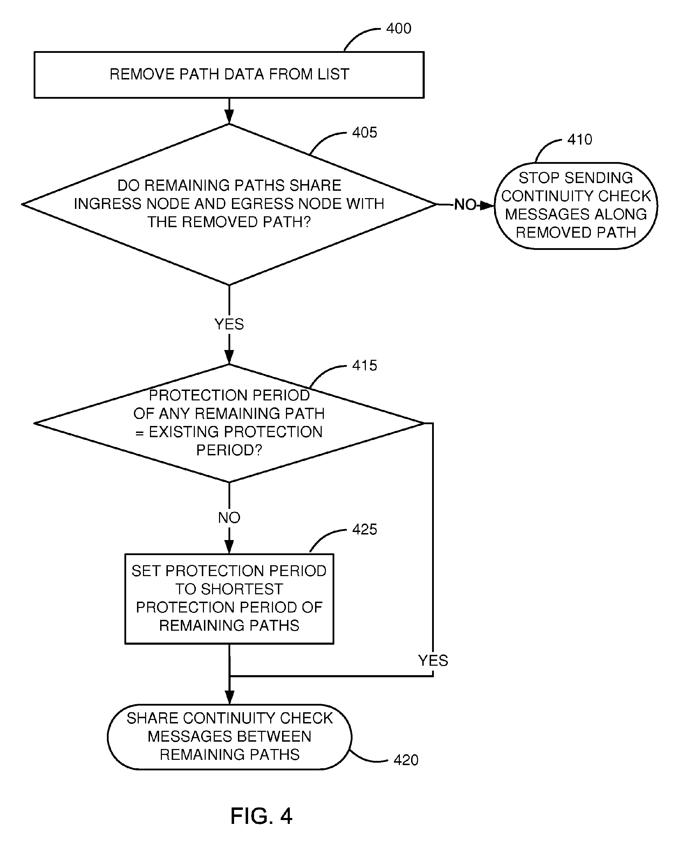

Reference is now made to FIG. 4, which is a simplified flow chart for a communication node to remove a protected path in the example embodiment of FIG. 2A.

As described above with reference to removing a protected path from protection, the communication node I 205 removes the path identifier, the ingress node, the egress node, and the protection period which refer to the removed path, from path protection list (400).

The communication node I 205 checks whether remaining paths share an ingress node and an egress node with the removed path (405).

If no remaining protected paths exist from the communication node I 205 to the communication node E 210, the communication node I 205 stops sending CCMs to the communication node E 210 (410).

The communication node I 205 checks whether a protection period of any remaining path is equal to the protection period of the removed path (415).

If there is a remaining path with a protection period equal to the protection period of the removed path, there is no need to change protection period for the CCMs, and the communication node I 205 continues to send CCMs to the communication node E 210 at the previous period, for protecting the remaining protected paths (420).

If the protection period of no remaining protected path is equal to the existing protection period, there is no need to continue at such a period, and the communication node I 205 sets a new protection period equal to the shortest protection period required for the remaining protected paths (425), and continues to send CCMs to the communication node E 210 at the new period, for protecting the remaining protected paths (420).

It is noted that the communication between an ingress node and an egress node need not necessarily be direct, with no intervening nodes.

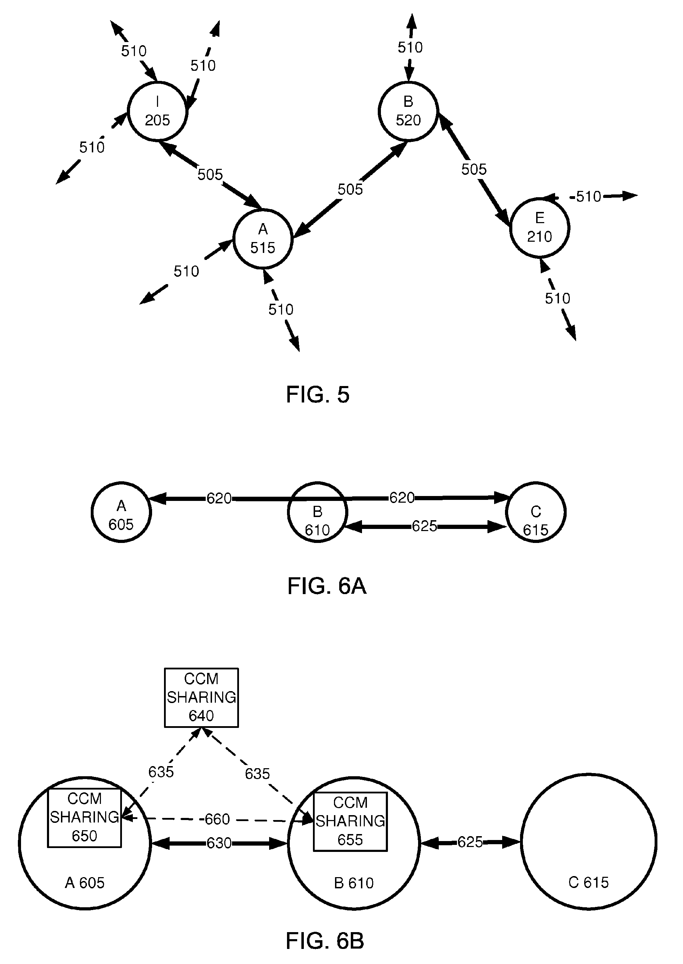

Reference is now made to FIG. 5, which is a simplified block diagram illustration of a communication network using the method of the example embodiment of FIG. 2A.

A communication route 505 exists between an ingress communication node I 205 and an egress communication node E 210. One or more protected paths are established on the communication route 505.

FIG. 5 emphasizes, by depicting additional communication nodes on the route 505, such as example nodes A 515 and B 520, that the route 505 is not necessarily a single-hop route.

FIG. 5 additionally emphasizes, by depicting additional paths 510, that any one of the communication nodes I 205, E 210, A 515, and B 520 may optionally be connected to other communication nodes, which are not shown. In fact, in order to optionally provide protection to paths on the route 505, the ingress communication node I 205 and the egress communication node E 210 are connected by at least one route serving as a backup to the route 505, and the backup route is not depicted in FIG. 5.

In some embodiments of the invention, when several protected paths share a common leg between two nodes, one or more of the several protected paths are broken into shorter sub-paths, or legs, including the common leg. The common leg optionally shares CCMs between the several protected paths.

Reference is now made to FIGS. 6A and 6B, which are a simplified block diagram illustrations of example protected paths in a communication network, depicting how using alternative example embodiments of the present invention saves overhead in sending Communication Continuity Messages.

By way of a non-limiting example, three communication nodes exist in a communication network: a first communication node A 605, a second communication node B 610, and a third communication node C 615.

FIG. 6A depicts how, in absence of the alternative embodiment of the present invention, path protection would take place. A first protected path 620 would be established between the first communication node A 605 and the third communication node C 615, and CCMs would be sent between the first communication node A 605 and the third communication node C 615. A second protected path 625 would be established between the second communication node B 610 and the third communication node C 615, and CCMs would be sent between the second communication node B 610 and the third communication node C 615.

It is noted that two sets of CCMs are being sent on the communication route between the second communication node B 610 and the third communication node C 615. There is no need to send two sets of CCMs when one set is enough.

In some example embodiments of the invention a technician setting up the protected paths between node A 605, node B 610, and node C 615, recognizes that there is a shared section between node B 610 and node C 615, and sets up shared protection for protected paths between node B 610 and node C 615.

FIG. 6B depicts how, in alternative example embodiments of the present invention, path protection takes place.

In some example embodiments of the invention a central CCM sharing management unit 640 determines that a saving is possible in CCMs sent on the leg between the second communication node B 610 and the third communication node C 615.

A non-limiting example of a method by which the central CCM sharing management unit 640 determines whether a saving is possible, that is, whether path protection may be shared, is by reviewing data describing protected paths. An example of such data is described in Table 1, and such data is optionally stored in the central CCM sharing management unit 640. The central CCM sharing management unit 640 optionally automatically detects that the protected path between node A 605 and node C 615 passes through node B 610.

In some embodiments of the invention some or all of the protected paths are ***explicitly*** described in a table, such as Table 1, using all of the nodes through which they pass, and the central CCM sharing management unit 640 detects when a shared section occurs.

In some embodiments of the invention some or all of the protected paths are only ***implicitly*** described in a table, such as Table 1, using only some of the nodes through which they pass, such as only an ingress node and an egress node. The central CCM sharing management unit 640 optionally detects when a shared section occurs based on having at least a partial topological map of nodes and connections between the nodes. The CCM sharing management unit 640 optionally uses the topological mp of the nodes and connections to detect when a path shares a leg with another path.

The central CCM sharing management unit 640 communicates with 635 and instructs a CCM sharing unit 650 in the first communication node A 605 to set up a protected path 630 between the first communication node A 605 and the second communication node B 610, and to be prepared for rerouting to a backup communication route when either the protected path 630 fails or the protected path 625 fails.

The central CCM sharing management unit communicates with 635 and instructs a CCM sharing unit 655 in the second communication node B 610 to notify 660 the CCM sharing unit 650 in the first communication node A 605 if the protected path 625 fails.

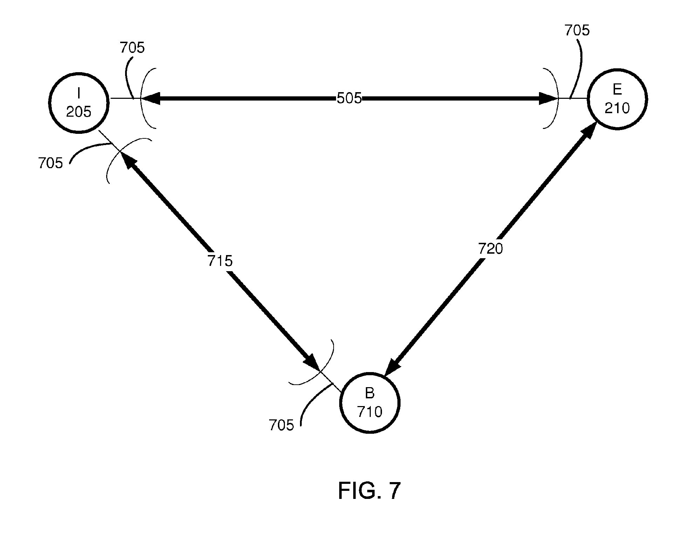

An example application of the invention is now described. Reference is now made to FIG. 7, which is a simplified block diagram illustration of an example application of the example embodiment of FIG. 2A.

A wireless communication route 505 is established between antennas 705, connecting an ingress communication node I 205 and an egress communication node E 210.

A backup route is established between the ingress communication node I 205, an intermediate communication node B 710, and the egress communication node E 210. The backup route includes, by way of a non-limiting example, a wireless route 715 established between an antenna 705 in the ingress communication node I 205 and an antenna 705 in the intermediate communication node B 710, and a wired communication route 720 between the intermediate communication node B 710 and the egress communication node E 210.

A plurality of protected paths are set up on the wireless communication route 505, using the above-mentioned backup route. The wireless communication route 505 may deteriorate, at some time, for any of a number of reasons, at which point the protected paths' traffic is rerouted to the backup route, which may comprise one or more wireless sections, and/or one or more wired sections.

It is expected that during the life of a patent maturing from this application many relevant communication routes, protected paths, and continuity check messages will be developed and the scope of the terms "communication routes", "protected paths", and "continuity check messages", is intended to include all such new technologies *a priori.*

The terms "comprising", "including", "having" and their conjugates mean "including but not limited to".

As used herein, the singular form "a", "an" and "the" include plural references unless the context clearly dictates otherwise. For example, the term "a unit" or "at least one unit" may include a plurality of units, including combinations thereof.

The words "exemplary" and "example" are used herein to mean "serving as an example, instance or illustration". Any embodiment described as "exemplary" or as an "example" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A method for managing protection of a plurality of defmed paths in a communication system comprising:
listing the defmed paths, each item in the list comprising:
a defmed path identifier;
a defmed path ingress node;
a defmed path egress node; and
a defmed path protection period;
wherein some of the defined paths share an ingress node and an egress node;
managing a sending of Continuity Check Messages (CCMs) along at least some of the defined paths, such that a CCM is sent every protection period; and
for at least a plurality of the defmed paths which share an ingress node and an egress node, managing a sharing of the protection of the plurality of the defined paths, the sharing comprising sending one set of CCMs, shared by the plurality of the defined paths, at a frequency based, at least in part, on a shortest one of the protection periods of the plurality of the defined paths.

2. The method of claim 1 in which, when a message sent along one of the defined paths sharing protection can be detected as sent along one of the defined paths sharing protection, sending a CCM is postponed.

3. The method of claim 2 in which the sending a CCM is postponed by the shortest one of the protection periods.

4. The method of any one of claims 1-3 and further comprising adding managing protection of an additional defmed path, the adding comprising:
adding the path identifier, the ingress node, the egress node, and the protection period to the list;
if the additional defmed path shares the ingress node and the egress node with an existing defmed path in the list:
then
if the additional defmed path has a protection period equal to or longer than the shortest one of the protection periods,
then sharing the one set of CCMs, with the shortest one of the protection periods,
else changing the shortest one of the protection periods to be the protection period of the additional defined path, and sharing the one set of CCMs, with the protection period of the additional defined path;
else managing the protection of the additional defined path by sending an additional set of CCMs at a frequency defined by the protection period of the additional defmed path.

5. The method of any one of claims 1-4 and further comprising removing protection of a defmed path from the managing, the removing comprising removing the path identifier, the ingress node, the egress node, and the protection period of the defined path from the list.

6. The method of claim 5 and further comprising:
checking whether the defmed path to be removed is protected by a shared set of CCMs with one or more existing defined paths; and
if the defmed path to be removed has a protection period shorter than the protection period used by the shared set of CCMs,
then changing the protection period used by the shared set of CCMs to be equal to a shortest one of the protection periods of the one or more existing defmed paths.

7. A method for protecting a plurality of paths which share at least one leg in a communication network, comprising sharing, between the paths, Continuity Check Messages (CCMs) for at least the shared leg.

8. The method of claim 7 and further comprising instructing a communication node to break up a protected path into a plurality of protected sub-paths, and share protection of at least one sub-path.

9. The method of claim 8 in which the instructing is performed by a CCM sharing unit which detects shared sub-paths when such shared sub-paths exist among the protected paths.

10. The method of claim 7 and further comprising a person breaking up a protected path into a plurality of protected sub-paths, and setting up shared protection of at least one sub-path.

11. A node in a communication network with protected paths, comprising a Continuity Check Message sharing unit.

12. A Continuity Check Message sharing unit for managing Continuity Check Message sharing for more than one communication node in a communication network.

13. Software for implementing the method of claim 1.

14. A communication network implementing the method of claim 1.

15. A computer-readable storage medium containing a set of instructions for a device for implementing the method of claim 1.
